# EUROPEAN PATENT APPLICATION

(11) **EP 0 782 341 A2**
(43) Date of publication of application: **02.07.1997**
(21) Application number: 96402897.1
(22) Date of filing: 26.12.1996
(51) Int. Cl.: H04N 7/36, H04N 7/50

(54) **Image data compression system**

(30) Priority: 27.12.1995 US 579193
(71) Applicant: THOMSON CONSUMER ELECTRONICS, INC., Indianapolis, IN 46206 (US)
(72) Inventor: Lam, Wai-Man, 92050 Paris la Defense 5 (FR); Canfield, Barth Alan, 92050 Paris la Defense 5 (FR); Beyers, Billy Wesley, Jr., 92050 Paris la Defense 5 (FR)
(74) Representative: Ruellan-Lemonnier, Brigitte

(57) **Abstract**

A disclosed block based data compression system employs two parallel, independent compression networks. One network (20, 22) provides fixed compression, the other network (14, 16) provides variable compression. Compressed data from one or the other of these networks is chosen to obtain satisfactory image quality and a desired compression factor. The output of the fixed compression network is selected for use (25) if a bit counter (18) determines that the output of the variable compression network does not achieve the desired compression factor.

## Description

This present invention concerns a data compression network for use in a digital signal processing system. In particular, the invention concerns a data compression network for an image signal processor such as may be employed in a television system.

Sophisticated digital signal processing systems with associated large memory requirements are becoming increasingly common. The need to limit memory requirements, particularly in consumer products such as video and television systems, is important to keep to costs of such products at a reasonable level.

Various data compression techniques are available to reduce memory requirements and to facilitate the transmission of data over bandwith limited channels, while maintaining acceptable image quality. These compression techniques include differential pulse code modulation (DPCM), subband coding including transform coding, vector quantization, hybrid coding, and adaptive versions of these techniques. Recent developments in image signal processing include the development of the MPEG (Motion Picture Experts Group) signal processing standard (ISO/IEC 13818-2, May 10, 1994). This widely accepted standard uses image block processing, and is particularly attractive for use with satellite, cable and terrestrial broadcast systems including high definition television (HDTV) systems. The execution of the MPEG decoding algorithm requires storage of previously decoded data. In accordance with the principles of the present invention, it is herein recognized as desirable to reduce the storage requirements by using a block based compression system.

In accordance with the principles of the present invention, there is disclosed a data compression system using two different compression networks. Compressed data from one or the other of these networks is chosen to obtain satisfactory image quality and a desired compression factor.

In a disclosed preferred embodiment, one network provides fixed data compression, and the other network provides variable data compression. The data compression is block-based, and the two data compression networks operate concurrently in parallel. The output of the fixed compression network is used if it is determined that the output of the variable compression network does not achieve the desired compression factor.

### Brief Description of the Drawings

Figure 1 is a block diagram of a portion of an image data processing system including a data compression network in accordance with the principles of the present invention.

Figure 2 shows the variable lenth compressor of Figure 1 in greater detail.

Figure 3 depicts an image block pixel scanning pattern for a predictive coding process.

Figure 4 illustrates a group of pixels helpful in understanding the operation of a portion of the predictive coding process.

Figure 5 shows the fixed length compressor of Figure 1 in greater detail.

Figure 6 depicts an alternative dual path compression network.

The compression system to be described uses a variable compression network in parallel with a fixed compression network. The compression networks operate concurrently on the same pixel block. The variable compression network has the advantage of being lossless or substantially lossless, and is the preferred compression network. If the variable compression network in not successful in achieving a predetermined desired amount of data compression, the output of the fixed compression network is used instead. While the fixed compression network can obtain the desired amount of compression, this network has the disadvantage of being lossy.

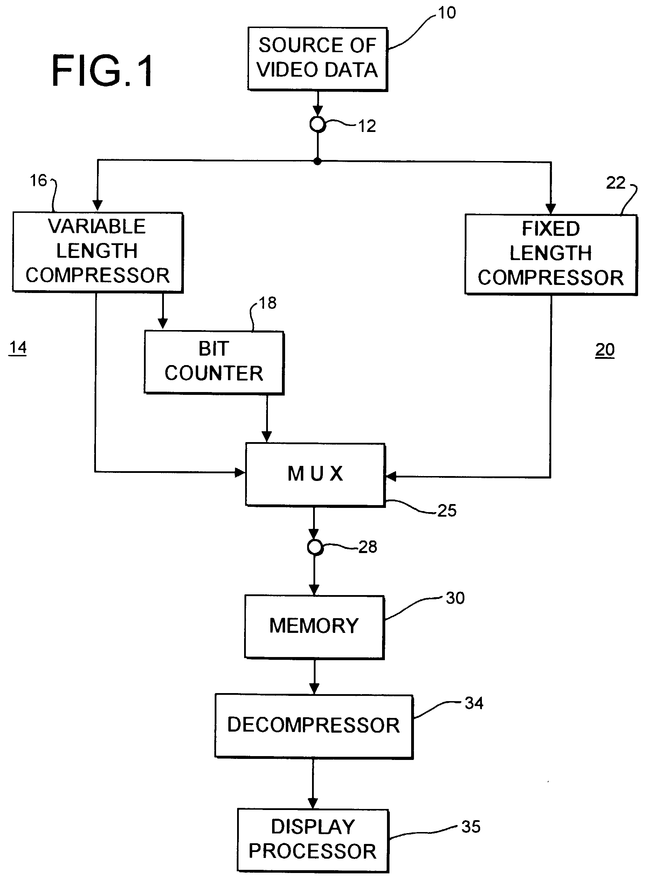

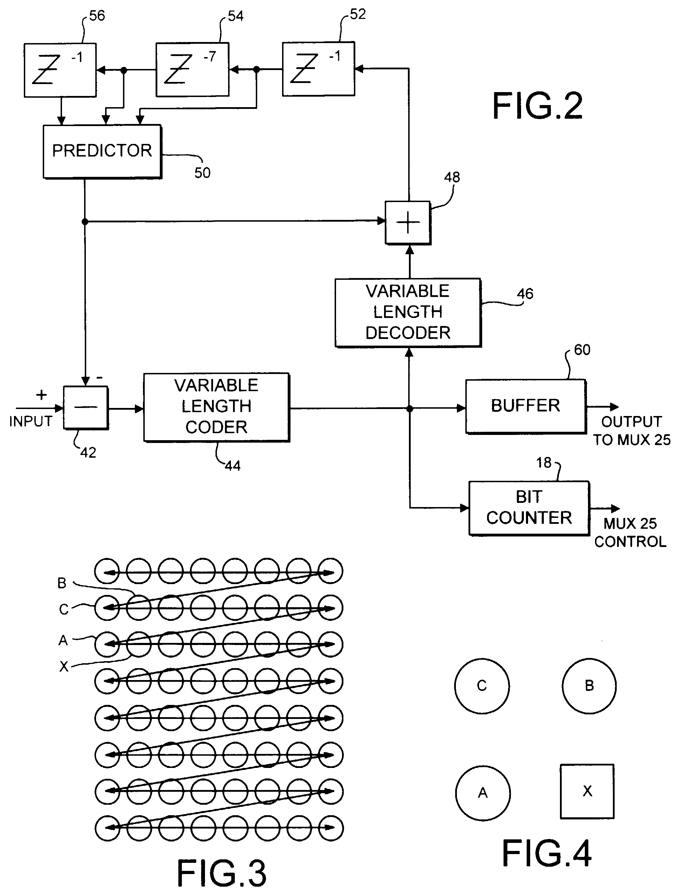

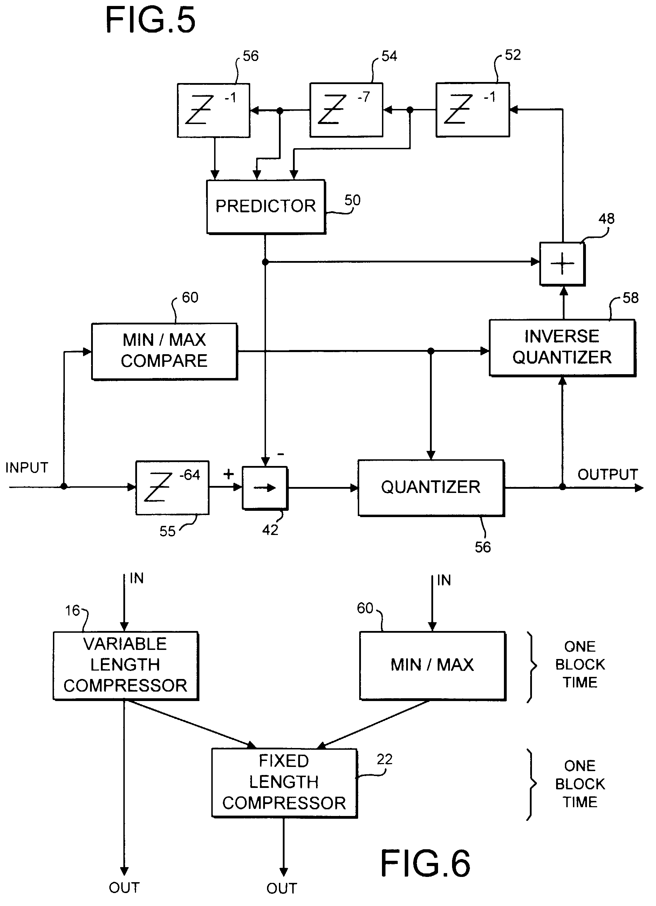

In Figure 1, a source of image representative data from a source 10 is applied to an input terminal 12 of a data compression network including parallel independent data compression paths 14 and 20. Path 14 is a substantially lossless path and includes a variable compression processor 16 which provides compressed data to one of the signal inputs of a multiplexer (MUX) 25, and a bit counter 18. Counter 18 monitors the bit count of each data block compressed by unit 16, and provides a switching control signal to a control input of MUX 25. Additional details of compression path 14 are shown and will be discussed inconnection with Figure 2. Path 20 is a lossy path which includes a fixed compression processor 22 as shown in greater detail in Figure 5. Compressed output data from unit 22 is provided to another signal input of MUX 25.

MUX 25 provides either the compressed data from path 14 or the compressed data from path 20 to an output terminal 28 of the compression network as will be explained in greater detail below. The output compressed data is provided to a memory 30. Output data from memory 30 is decompressed by unit 34 before being provided to a display processor 35. Processor 35 is essentially a sink of video data, and may comprise a motion compensation processor within an MPEG decoding loop, or other types of video processor requiring data from a frame storage element such as memory 30.

In this embodiment, source 10 provides output data representating a raster scanned image display, with the data being provided in the form of a succession of blocks of pixels (picture elements), eg., 8 x 8 pixel blocks. This is accomplished in a well known manner, such as by using a buffer memory with suitably controlled read/write functions. Each pixel value is defined by an 8-bit word.

Block based compression network 14, 20 compresses each pixel block independently and essentially guarantees that each block will be compressed by a predetermined compression factor or more. The output of either compression path 14 or path 20 is chosen for use by utilization network 30, 34, 35 so as to provide satisfactory image quality and the desired compression factor. The compression factor indicates the amount of memory space that will be saved when storing a pixel block. For example, a compression factor of 50% results in a compressed block that is 50% of its original size, and will occupy 50% less memory space compared to the original block. Compression factors greater than 50% also may be used. However, it has been determined that compression factors not exceeding 50% produce good results. A compression factor of 25% is essentially transparent compared to conventional decoder processing without such compression. At 50% compression the results are less transparent, but the results are acceptable and are not considered to be significantly different than conventional decoder processing without memory reduction.

The multipath nature of the compression network achieves high image quality and assures that at least the fixed compression factor will be achieved. Variable compression path 14 exhibits lossless or near-lossless compression, but the number of output bits provided by path 14 is variable. The number of compressed block output bits from path 14 is monitored by counter 18. If the number of compressed block bits 14 is equal to or less than a predetermined target bit count associate with the predetermined compression factor, the compressed data output from path 14 is selected by MUX 25 and conveyed to memory 30. Otherwise, the compressed block output from fixed compressor 22 is used. As will be discussed, fixed compressor 22 uses a lossy compression routine with quantization to produce a fixed target bit output. To facilitate decompression, for each compressed block, each compression network inserts signalling information into the datastream to indicate the type of compression that was performed on the block. The signalling information could be one or more bits inserted at the beginning of each compressed data block, eg., in a header. The signalling bits are sensed by decompression networks 34 which perform the inverse of the compression that was used to compress the block associated with the given signalling bits. The header may contain other control information, such as quantization control information for example.

Variable compression is preferably used in smooth areas of an image to avoid annoying contouring artifacts. Image quality is essentially guaranteed to be high over such areas because variable compressor 16 uses little or no quantization, which is a substantially lossless process. On the other hand, fixed compressor 22 may be used in image areas containing significant detail information. Since quantization noise in such areas is not likely to introduce much perceptible error, the perceived quality of an image area subjected to fixed compression in path 20 will very likely be good. However, it is not necessary to selectively use variable and fixed compression in this manner, although in many systems it will be beneficial to do so. The choice of which of the two compressed blocks to use is simply based on the bit count of the compressed block from variable compressor 16. If the bit indicates that compressor 16 has achieved the desired compression, it is used. Compressor 16 is the preferred compressor because it is lossless. Otherwise, compressor 22 is used.

The block based compression performed by compression network 14, 20, and the independent compression of every block, allows a decoder to decode every block without needing information concerning any other block. Since each block is compressed by a predetermined compression factor, the memory address of the first pixel of each block is known in advance. Thus each block can be accessed from memory without information concerning any other block. In this regard it is noted that areas are reserved in memory for each block. In the case of 50% compression, each reserved area is the size of half the original block. Thus each compressed block will fit in the memory area reserved for it due to the fact that bits are counted and the output of compressor 22 is used if necessary. If preferred compressor 16 is successful in achieving greater than the target compression amount, the output of compressor 16 is used, and some of the reserved memory space is not used by the compressed block data. That is, such compressed block begins to fill its reserved memory area beginning with a predetermined starting address and continuing to an address less than the last address reserved for that block.

It is desirable for block based compression to be capable of achieving both high compression efficiency and easy access to each pixel of a pixel block, even though these two results are competing in nature. That is, high compression efficiency requires a large block size, while easy access to pixels requires a small block size. It has been found that both of these characteristics can be substantially achieved with pixel block sizes of 8x8 pixels and 16x4 pixels. The blocks are formed into the required NxN pixel sizes in unit 10 as mentioned previously.

In this example each field based pixel block is scanned in a raster manner as shown in Figure 3, from left to right in a downward direction. This scanning is done in both units 16 and 22 using delay elements 52, 54 and 56. The variable compression network is shown in Figure 2. This network uses a DPCM loop with adaptive prediction to produce a difference signal (residual) using known techniques. This difference is variable length coded, and the resulting number of coded difference bits is monitored to indicate whether or not the desired compression factor was achieved for the current block. The architecture of Figure 2 is a classic predictive coding network resembling an MPEG compression loop.

In Figure 2, differencing network 42 produces an output representing the difference (residual) between input pixel values applied to a non-inverting input (+) of unit 42 and predicted pixel values applied to an inverting input (-) of unit 42, respectively. The predicted value is obtained using a DPCM processing loop including differencer 42, variable length coder 44 and a variable length decoder 46 which performs the inverse of the coding operation performed by unit 44. The variable length coder can include an optional high resolution quantizer and an entropy coder (eg., a Huffman coder) for lossless or near lossless compression. The variable length decoder includes an inverse quantizer an entropy decoder. The inversely decoded output from unit 46 is summed in a unit 48 with an output from a prediction network including a predictor 50 and associated pixel delay elements 52, 54 and 56. These elements provide delays of one, seven and one pixels, respectively. A predicted pixel value output from unit 50 is applied to inputs of adder 48 and differencer 42.

Figure 4 shows an exemplary arrangement of a group of four pixels A, B, C and X (the pixel to be predicted) associated with the predictive processing and coding operation of the DPCM network. This group of pixels is also referenced in the pixel block shown in Figure 3. In this example pixel B is delayed by a one pixel interval relative to pixel C, pixel A is delayed by a seven pixel interval relative to pixel B, and pixel X is delayed one pixel interval relative to pixel A. The DPCM prediction process is well-known and will be discussed subsequently. Compressed pixel data from the output of variable length coder 44 are buffered by a unit 60 before being provided to MUX 25 of Figure 1. Buffer 60 stores the output of the variable compression process until the entire block has been processed, at which time it can be determined whether or not the target compression factor has been reached.

The bit count of each compressed block output from coder 44 is monitored by bit counter 18, which may be implemented by any of several known techniques. After each pixel block has been variably compressed, counter 18 provides a Control output signal if the compressed bit count is at or below a predetermined threshold, indicating that the desired amount of compression has been reached or exceeded by the variable compressor. This Control signal is applied to the switching control input of MUX 25 for causing MUX 25 to convey the output from the variable length compressor to the utilization network. Otherwise, the compressed block output (for the same pixel block) from the fixed length compressor is conveyed to the utilization network.

The fixed compression network is shown in Figure 5. This network also uses a DPCM loop with adaptive prediction, as in the case of the variable compressor. In Figure 5 elements 48, 50, 52, 52, 54 and 56 perform the same functions as correspondingly labelled elements in Figure 2. Differencing network 42 also serves the same purpose as unit 42 in Figure 2 for producing a residual pixel value, but in a slightly different context as discussed below.

The fixed compression network uses non-linear quantizing of the difference (residual) pixel values provided at the output of unit 42 as a result of DPCM processing. A non-inverting input (+) of unit 42 receives input pixel values delayed 64 pixel intervals by a 64-pixel delay element 55. The inverting input (-) of unit 42 receives predicted pixel values from predictor 50. The residual pixel value output from unit 42 is subjected to quantization and inverse quantization by units 56 and 58 respectively. The quantization provided by unit 56 is fixed and guarantees a desired fixed amount of data compression. For example, to achieve 25% compression of an 8-bit data word, unit 56 removes the last two least significant bits. The amount of fixed compression is not less than the desired amount of compression. Units 56 and 58 operate under control of a Min/Max comparison network 60 which determines the minimum and maximum pixel values for each pixel block.

Quantizer 56 could also be arranged to use a fixed quantizer rule. However, it is more efficient to adapt the quantizer rule according to the minimum and maximum pixel values associated with the block being processed. Min/Max comparison unit 60 determines these values. Element 55 provides the time delay needed for the minimum and maximum values of all 64 pixels of a given block to be examined before the first pixel of the block is processed.

Referring back to Figure 1, compressor 22 has no inherent delay, but the combination of the min/max comparison and delay element 55 (Figure 5) causes compressor 22 to exhibit a one block delay, which matches the one block delay exhibited by the variable compression path. The fixed length compression network evaluates each of the 64 pixel values of each 8x8 pixel block twice to determine the minimum and maximum pixel values of that block. This process is facilitated by the 64 pixel (one block) delay provided by element 55. The minimum and maximum values are used to adaptively select between non-linear quantizing rules to be used for each block being processed. The two pass approach needed to evaluate each block twice does not add additional latency to the system because of the one block latency exhibited by buffer 60 of the variable compression path when determining if the variable compressor has achieved the desired compression.

As noted above, when compressors 16 and 22 are arranged in parallel and fixed compressor employs min/max comparison, there is a one block delay in compressor 22. Variable compressor 16 does not have an inherent one block delay, so bit buffer 60 holds the bits one block time longer in order to wait for the output of compressor 22. If fixed compressor 22 did not use min/max comparison, then compressor 22 would not exhibit a one block delay. Variable compressor 16 does not exhibit an inherent one block delay due to buffer 60. Buffer 460 stores the bits of compressor 16 before a decision is made regarding which of the variable or fixed compression outputs to use. Bit counter 18 determines which output to use when the variable and fixed compression networks are arranged in parallel.

However, compressors 16 and 22 need not be arranged in parallel, as shown in Figure 6. In this case compressor 16 processes a pixel block first, and at the same time Min/Max comparison unit 60 (Figure 5) determines the minimum and maximum pixel values for the block, as explained previously. After a one block delay, it will be known whether or not compressor 16 has achieved the target compression, and thereby whether or not fixed compressor 22 needs to process the block. If variable compressor 16 has achieved the target compression factor, it will output the variable-compressed block to the frame memory. Otherwise, unit 22 will compress the block. Since compressors 16 and 22 may contain similar architecture and functional elements, this implementation advantageously allows such similar elements used for variable compression in unit 16 to be used again for fixed length compression in unit 22.

It is not essential to adaptively change the quantizer rules with respect to quantizer 56 of Figure 5. Simple linear quantization could be used. Adapting the quantizer rule according to the min/max pixel values reduces the amount of loss. Each block is scanned once to find the min and max pixel values. Knowledge of these values allows an appropriate quantizer rule to be chosen before the first (residual) value is quantized. Element 55 delays the first pixel until the quantizer rule is established, which rule is also used by inverse quantizer 58. This may require that signalling bits be added to the datastream to notify the decompression function of the quantizer rule that is being used.

The quantizer may be considered as a form of look-up table, with output bits from unit 42 representing addresses. Quantizer 56 outputs 4-bit data in the case of 50% compression. The output of quantizer 56 is an index that is used by unit 58 to approximate the output of unit 42. This is where a loss may occur, since if the input to unit 58 is only 4-bit data, only 16 data combinations are possible, while unit 42 can provide up to 256 possible outputs. The fixed compression network of Figure 5 does not require an output buffer.

In this embodiment the same DPCM predictive coding process is employed by the compression networks of Figures 2 and 5. The current pixel being coded is predicted by using previously coded pixels, which are known to decompressor 34. The prediction process can be explained with reference to Figure 4, where pixel X is the pixel value to be predictively coded. Pixels A, B and C have been predictively coded previously and are known to the decompression section. A prediction of X, X_{pred}, uses the values of A, B and C in accordance with the following pseudo code, which describes the algorithm to be used: 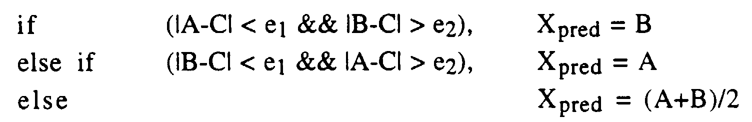 Values e1 and e2 are constants representing predetermined thresholds . This algorithm is used only for pixels not located in the first row or the first column of the block being processed. Some exceptions are handled as follows: the first pixel in a block is coded very finely without reference to any other pixel, pixels in the first row use pixel value A as the predictor, and pixels in the first column use pixel value B as the predictor. Basically, this algorithm attempts to detect an edge. In the first case, a vertical edge is suggested between pixels C and B and between pixels A and X. Thus B is the best predictor. The second case suggests a horizontal edge between A and C and between B and X. Thus A is the best predictor. In the third case, no obvious edge is found. In this case both A and B are equally good predictors, so their average value is used.

The disclosed block based data compression network can be advantageously used to process MPEG compatible datawords. The network exhibits nearly lossless compression for reducing the amount of memory needed to store 8x8 luminance data or 4x4 U,V (chrominance) data. The amount of compression is selectable and may be 25% or 50%, for example. Low contrast , low detail image blocks are usually losslessly compressed, while high contrast, high detail data blocks may experience some acceptable loss, particularly in the case of 50% data compression. Although in some cases decompressed pixel blocks may exhibit differences compared to original pixel blocks, the disclosed compression system is preferred over horizontal detail reduction for reducing memory requirements.

The disclosed compression system can be applied to all Profiles and all Levels of the MPEG specification, as well as to other digital data processing schemes. In addition, the disclosed compression system may be advantageously used in consumer image processing products such as standard definition and high definition televison systems. In the Grand Alliance HDTV system proposed for the United States, image sequences of 1920 x 1088 pixels in size are encoded using the MPEG standard. The corresponding decoder at a television receiver requires at least 71.72 Mbits of memory for storing decoded frames. Since the cost of memory can be a significant cost of any system, particularly a frame-based decoding system, any means which can reduce the memory requirements can significantly reduce the cost of the decoding system.

## Claims

1. A system for processing image representative digital data, including apparatus characterized by:
a first data compressor (16) exhibiting a first data compression characteristic;
a second data compressor (22) exhibiting a different second data compression characteristic;
an input (10,12) for applying said image data to both said first and second compressors concurrently;
a utilization network (30-35); and
a selection network (25) for conveying compressed data exhibiting a desired compression factor from one or the other of said first and second compressors to said utilization network.

2. A system according to claim 1, characterized in that
said first compressor exhibits a variable compression characteristic; and
said second compressor exhibits a fixed compression characteristic.

3. A system according to claim 2, characterized in that said variable compression is preferred to said fixed compression such that said selection network selects (a) variable compressed data from said first compressor when said variable compressed data exhibits a predetermined desired compression factor or greater, and (b) fixed compressed data from said second compressor when said variable compressed data exhibits less than said compression factor.

4. A system according to Claim 1, for processing image representative digital data arranged in the form of blocks of picture elements (pixels), characterized by:
said first data compressor exhibiting a variable data compression characteristic;
said second data compressor exhibiting a fixed data compression characteristic, said second compressor operating in parallel with said first compressor; further including:
means coupled to said first compressor for determining if a data block processed by said first compressor exhibits a desired compression factor; and
said selection network selectively conveying to said utilization network (a) variable compressed data from said first compressor when said variable compressed data exhibits a desired predetermined compression factor or greater, and (b) fixed compressed data from said second compressor when said variable compressed data exhibits less than said compression factor.

5. A system according according to claim 4, characterized in that
said determining means comprises a bit counter for determining the number of bits comprising a comressed block.

6. A system according to claim 4, characterized in that said utilization network comprises a memory.

7. A system according to claim 4, characterized in that said image data is MPEG compatible data; and said utilization network comprises a memory.

8. A system according to claim 7, characterized in that
said second compressor comprises a data quantizer; and
said first and second compressors each include a DPCM network.

9. A method for processing image representative digital data arranged in the form of blocks of picture elements (pixels), characterized by the steps of:
compressing said image data with a first compression characteristic;
processing said image data with a different second compression characteristic;
determining if data subjected to said first compression exhibits a predetermined compression factor or greater compression;
coveying first compressed data to an output if said first compressed data exhibits said predetermined compression factor or a greater compression factor; or
conveying second compressed data to said output if said first compressed data exhibits compression less than said predetermined compression factor.

10. A method according to claim 9, characterized in that
said first compression characteristic is a variable compression characteristic;
said second compression characteristic is a fixed compression characteristic; and
said image data is MPEG compatible data.
